# EUROPEAN PATENT SPECIFICATION

(11) **EP 3 064 543 B1**
(45) Date of publication and mention of the grant of the patent: **11.09.2019**
(21) Application number: 14864481.8
(22) Date of filing: 21.10.2014
(51) Int. Cl.: B60C 1/00, C08L 9/00, C08L 9/06, C08K 3/04, C08K 3/36, C08K 3/013

(54) **WINTER TIRE**
WINTERREIFEN
PNEU À NEIGE

(30) Priority: 20.11.2013 JP 2013240132
(43) Date of publication of application: 07.09.2016
(73) Proprietor: Sumitomo Rubber Industries, Ltd., Kobe-shi, Hyogo 651-0072 (JP)
(72) Inventor: MIYAZAKI Tatsuya, Kobe-shi Hyogo 651-0072 (JP)
(74) Representative: Manitz Finsterwald Patent- und Rechtsanwaltspartnerschaft mbB
(86) International application number: PCT/JP2014/077881
(87) International publication number: WO 2015/076048

(56) References cited:
- EP-A1- 1 369 454
- EP-A1- 1 380 604
- WO-A1-2008/044722
- WO-A1-2012/073841
- WO-A1-2015/001935
- WO-A1-2015/040991
- JP-A- 2004 277 506
- JP-A- 2005 154 754
- JP-A- 2012 111 795
- JP-A- 2013 007 025
- JP-A- 2013 064 102
- DATABASE WPI Week 201080 Thomson Scientific, London, GB; AN 2010-P41139 XP002769268, & JP 2010 265427 A (TOYO RUBBER IND CO LTD) 25 November 2010 (2010-11-25)
- DATABASE WPI Week 198607 Thomson Scientific, London, GB; AN 1986-045029 XP002769269, & JP S60 262839 A (ASAHI CHEM IND CO LTD) 26 December 1985 (1985-12-26)

## Description

### TECHNICAL FIELD

The present invention relates to a winter tire including a tread formed from a predetermined rubber composition.

### BACKGROUND ART

Winter tires, in particular studless winter tires, are designed to have reduced hardness (Hs) at low temperatures for better conformity to the fine unevenness of ice, thereby ensuring grip performance on ice. For this purpose, polybutadiene rubber (BR) having a low glass transition temperature (Tg), and especially high-cis BR, is used as a rubber component in the rubber compositions for use in studless winter tires.

Further, attempts have been made to improve grip performance on ice by incorporating aluminum hydroxide, Pana-Tetra zinc oxide, volcanic ashes, eggshell powder, ground walnut, or the like in a rubber composition to improve the scratching effect on ice. Other attempts have been made to improve grip performance on ice by incorporating an expanded rubber or a water-absorbing rubber in a rubber composition to absorb or remove a water film, thereby improving adhesion between the tread rubber and ice. Unfortunately, these methods reduce abrasion resistance.

Tires with lower abrasion resistance will result in reduced mileage. Meanwhile, it is desired for winter tires such as studless winter tires to have higher mileage. Thus, there is a need for rubber compositions for use in winter tires which have not only excellent grip performance on ice but also excellent abrasion resistance.

Also known are methods for improving the grip performance or abrasion resistance of rubber compositions by incorporation of an α-methylstyrene resin, a coumarone-indene resin, or other resins (see, for example, Patent Literature 1). SA85, a commonly used α-methylstyrene resin available from Arizona Chemical, was originally developed for rubber compositions for summer tires containing styrene-butadiene rubber (SBR) and polybutadiene rubber (BR). Recently, however, it has been incorporated also in rubber compositions containing a large amount of isoprene-based diene rubber such as natural rubber (NR) .

Unfortunately, when SA85 with a high Tg or a coumarone-indene resin is incorporated in a rubber composition containing a large amount of isoprene-based diene rubber, the hardness (Hs) at low temperatures increases so that grip performance on ice is reduced. Accordingly, there is room for improvement.

WO 2015/040991 A1 is prior art under Article 54(3) EPC and concerns a pneumatic tire according to the disclaimer of claim 1. Such tires are excluded from the scope of protection by the disclaimer contained in claim 1.

WO 2015/001935 A1 is prior art under Article 54(3) EPC and concerns a tire rubber composition and a pneumatic tire.

### CITATION LIST

### PATENT LITERATURE

Patent Literature 1: JP 2013-1805 A

### SUMMARY OF INVENTION

### TECHNICAL PROBLEM

As described above, there remains room for improvement in allowing winter tires such as studless winter tires to simultaneously achieve high levels of grip performance on ice and abrasion resistance.

The present invention aims to solve the above problem and provide a winter tire having both improved grip performance on ice and abrasion resistance and further having good mechanical strength.

### SOLUTION TO PROBLEM

The present invention relates to a winter tire, including a tread formed from a rubber composition, the rubber composition containing: an oil-extended polybutadiene rubber having a cis content of 95 mol% or more, a vinyl content of 1 mol% or less, and a weight average molecular weight of 530,000 or more; an isoprene-based diene rubber; silica; and carbon black, the oil-extended polybutadiene rubber being synthesized using a rare earth catalyst, the rubber composition containing, based on 100% by mass of the total rubber solids, 8% to 80% by mass of a polybutadiene rubber component contained in the oil-extended polybutadiene rubber and 13% to 80% by mass of the isoprene-based diene rubber, the rubber composition containing, relative to 100 parts by mass of the total rubber solids, 15 to 125 parts by mass of the silica and 3 to 70 parts by mass of the carbon black, provided that a combined amount of the silica and the carbon black is 45 to 130 parts by mass.

Preferably, the rubber composition has a total amount of sulfur derived from crosslinking agents of 0.5 to 1.4 parts by mass relative to 100 parts by mass of the total rubber solids.

The oil-extended polybutadiene rubber preferably has a weight average molecular weight of 700,000 or more.

The rubber composition preferably further contains at least one of a terpene-based resin having a softening point of 104°C to 126°C or an aluminum hydroxide having a nitrogen adsorption specific surface area of 10 to 60 m²/g.

The rubber composition preferably contains, based on 100% by mass of the total rubber solids, 20% to 70% by mass of the polybutadiene rubber component contained in the oil-extended polybutadiene rubber and 30% to 70% by mass of the isoprene-based diene rubber.

The total amount of sulfur derived from crosslinking agents is preferably 0.5 to 1.0 part by mass relative to 100 parts by mass of the total rubber solids.

### ADVANTAGEOUS EFFECTS OF INVENTION

Since the winter tire provided by the present invention includes a tread formed from a rubber composition that contains predetermined amounts of a specific oil-extended polybutadiene rubber, an isoprene-based diene rubber, silica, and carbon black, the provided winter tire achieves a balanced improvement in grip performance on ice, abrasion resistance, and mechanical strength.

### DESCRIPTION OF EMBODIMENTS

The winter tire of the present invention includes a tread formed from a rubber composition that contains predetermined amounts of a specific oil-extended polybutadiene rubber, an isoprene-based diene rubber, silica, and carbon black. Such a winter tire is able to achieve a balanced improvement in grip performance on ice, abrasion resistance, and mechanical strength.

In the winter tire of the present invention, the use of a specific oil-extended polybutadiene rubber and an isoprene-based diene rubber allows the polybutadiene rubber phase and the isoprene-based diene rubber phase to be finely dispersed and entangled with each other. As a result, strain can be distributed over the entire rubber and, further, a large amount of silica will be distributed to the polybutadiene rubber phase in which silica is usually less miscible, while a large amount of carbon black will be distributed to the isoprene-based diene rubber phase in which carbon black is usually less miscible, whereby both fillers will be uniformly distributed and dispersed to both rubber phases. It is probably for this reason that the properties are improved.

The rubber composition is first described.

The rubber composition in the present invention contains an oil-extended polybutadiene rubber (oil-extended BR) synthesized using a rare earth catalyst and having a cis content of 95 mol% or more, a vinyl content of 1 mol% or less, and a weight average molecular weight of 530,000 or more; an isoprene-based diene rubber; silica; and carbon black.

The rare earth catalyst for the oil-extended BR may be a known rare earth catalyst. Examples include catalysts containing lanthanide rare earth compounds, organic aluminum compounds, aluminoxanes, or halogen-containing compounds, optionally with Lewis bases. Among these, neodymium (Nd) catalysts including Nd-containing compounds as lanthanide rare earth compounds are particularly preferred.

Examples of the lanthanide rare earth compounds include halides, carboxylates, alcoholates, thioalcoholates, and amides of rare earth metals of atomic numbers 57 to 71. As described above, Nd catalysts are preferred among these because they allow the resulting BR to have a high cis content and a low vinyl content.

The oil-extended BR has a cis content of 95 mol% or more, preferably 96 mol% or more. If the cis content is less than 95 mol%, good abrasion resistance or mechanical strength may not be obtained. The upper limit of the cis content is not particularly limited and may be 100 mol%.

The oil-extended BR has a vinyl content of 1 mol% or less, preferably 0.5 mol% or less. If the vinyl content is more than 1 mol%, abrasion resistance may be reduced. The lower limit of the vinyl content is not particularly limited and may be 0 mol%.

The oil-extended BR has a weight average molecular weight (Mw) of 530,000 or more, preferably 600,000 or more, more preferably 700,000 or more. Conversely, although the upper limit of the Mw is not particularly limited, it is preferably 1,000,000 or less, more preferably 950,000 or less. When the Mw is more than 1,000,000, the polymer cannot be readily dispersed and cannot readily incorporate filler, so that mechanical strength tends to deteriorate.

The oil-extended BR refers to a polybutadiene rubber prepared by adding an extender component such as oil to polybutadiene rubber in the production of the polymer. When such a polybutadiene rubber is used, filler such as silica or carbon black can be readily dispersed into the polybutadiene rubber. Examples of the extender component include paraffin oil, aromatic oil, naphthenic oil, mild extraction solvates (MES), treated distillate aromatic extracts (TDAE), and solvent residue aromatic extracts (S-RAE). Among these, MES or TDAE is preferred.

The level of oil extension of the oil-extended BR (the amount of the oil component relative to 100 parts by mass of the BR component) is not particularly limited. The level may be appropriately chosen and is usually 5 to 100 parts by mass, preferably 10 to 50 parts by mass.

The oil-extended BR can, for example, be prepared by known methods using rare earth catalysts, or may be a commercial product. Examples of the commercial products include BUNA-CB29 TDAE (rare earth-catalyzed BR synthesized using a Nd catalyst, containing 37.5 parts by mass of TDAE relative to 100 parts by mass of the rubber component; cis content: 95.8 mol%, vinyl content: 0.4 mol%, Mw: 760,000) available from Lanxess and BUNA-CB29 MES (rare earth-catalyzed BR synthesized using a Nd catalyst, containing 37.5 parts by mass of MES relative to 100 parts by mass of the rubber component; cis content: 96.1 mol%, vinyl content: 0.4 mol%, Mw: 737,000) available from Lanxess.

The amount of the BR component (BR solids) contained in the oil-extended BR, based on 100% by mass of the total rubber solids, is 8% by mass or more, preferably 10% by mass or more, more preferably 15% by mass or more, still more preferably 20% by mass or more, particularly preferably 35% by mass or more. The amount is 80% by mass or less, preferably 75% by mass or less, more preferably 70% by mass or less, particularly preferably 65% by mass or less. If the amount is less than 8% by mass, grip performance on ice or abrasion resistance cannot be expected to be improved. If the amount is more than 80% by mass, the total oil content in the rubber compound is excessive so that the compatibility of silica with the rubber component may decrease and mechanical strength may deteriorate. Herein, the total rubber solids refers to the solid content of the rubber component in the rubber composition. However, in the case where the rubber component includes a liquid rubber which is crosslinkable with sulfur, the amount of the liquid rubber is also included in the total rubber solids.

The isoprene-based diene rubber may be, for example, synthetic polyisoprene rubber (IR), natural rubber (NR), or modified natural rubbers. Examples of NR include deproteinized natural rubber (DPNR) and highly purified natural rubber (UPNR). Examples of modified natural rubbers include epoxidized natural rubber (ENR), hydrogenated natural rubber (HNR), and grafted natural rubber. Among these, NR or IR is preferred, with NR being more preferred.

The amount of the isoprene-based diene rubber based on 100% by mass of the total rubber solids is 13% by mass or more, preferably 20% by mass or more, more preferably 25% by mass or more, still more preferably 30% by mass or more. The amount is 80% by mass or less, preferably 75% by mass or less, more preferably 70% by mass or less. If the amount is less than 13% by mass, the isoprene-based diene rubber cannot form a sea-island phase with the other diene rubber, i.e. polybutadiene rubber, so that grip performance on ice, abrasion resistance, and roll processability may deteriorate. If the amount is more than 80% by mass, the rubber compound has higher hardness at low temperatures, so that grip performance on ice and abrasion resistance may deteriorate.

The rubber component in the rubber composition may include another rubber other than the oil-extended BR and the isoprene-based diene rubber. Thus, it is another preferred embodiment of the present invention that the rubber composition contains another rubber other than the oil-extended BR and the isoprene-based diene rubber in an amount of 0% to 50% by mass based on 100% by mass of the total rubber solids.

Examples of such other rubbers include diene rubbers such as BRs other than the oil-extended BR, e.g. non-oil-extended BR, styrene-butadiene rubber (SBR), styrene-isoprene-butadiene rubber (SIBR), chloroprene rubber (CR), and acrylonitrile butadiene rubber (NBR); and non-diene rubbers such as ethylene-propylene-diene rubber (EPDM), butyl rubber (IIR), and halogenated butyl rubber (X-IIR).

The BR other than the oil-extended BR may be, for example, a non-oil-extended BR synthesized using a rare earth catalyst and having a cis content of 95 mol% or more, or a modified polybutadiene rubber for silica. For example, when the modified polybutadiene rubber for silica is used in combination with the oil-extended BR, a larger amount of silica can be distributed to the polybutadiene rubber phase in which silica is usually less miscible, to reinforce the polybutadiene rubber phase more strongly. Thus, abrasion resistance can be expected to be improved.

The modified polybutadiene rubber for silica is preferably at least one selected from the group consisting of a modified polybutadiene rubber which has been modified with a compound represented by Formula (1) below, a modified polybutadiene rubber which has been modified with a low-molecular-weight compound containing a glycidylamino group in the molecule, and a modified polybutadiene rubber which has been modified with a mixture of a low-molecular-weight compound containing a glycidylamino group in the molecule and a dimer or higher oligomers of the low-molecular-weight compound.

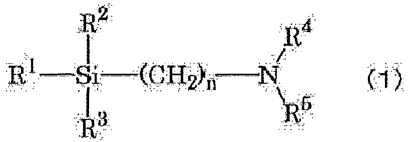

In Formula (1), R¹, R², and R³ are the same as or different from each other and each represent an alkyl group, an alkoxy group, a silyloxy group, an acetal group, a carboxyl group, or a mercapto group, or a derivative thereof; R⁴ and R⁵ are the same as or different from each other and each represent a hydrogen atom or an alkyl group, and R⁴ and R⁵ may be joined to form a ring structure together with the nitrogen atom; and n represents an integer.

The low-molecular-weight compound containing a glycidylamino group in the molecule is preferably a compound represented by the following formula: 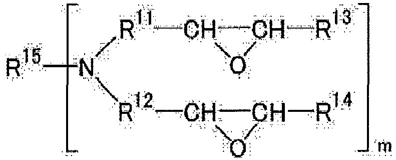 wherein R¹¹ and R¹² are the same as or different from each other and each represent a C1-C10 hydrocarbon group which may contain at least one selected from the group consisting of ether groups and tertiary amine groups; R¹³ and R¹⁴ are the same as or different from each other and each represent a hydrogen atom or a C1-C20 hydrocarbon group which may contain at least one selected from the group consisting of ether groups and tertiary amine groups; R¹⁵ represents a C1-C20 hydrocarbon group which may contain at least one selected from the group consisting of ether groups, tertiary amine groups, epoxy groups, carbonyl groups, and halogen groups; and m represents an integer of 1 to 6.

In the case of the rubber composition containing any of the above-mentioned other BRs as another rubber, the combined amount of the BR component contained in the oil-extended BR and the other BR (the total amount of BR solids), based on 100% by mass of the total rubber solids, is preferably 13% by mass or more, more preferably 20% by mass or more, still more preferably 25% by mass or more, particularly preferably 40% by mass or more, while it is preferably 85% by mass or less, more preferably 75% by mass or less, still more preferably 65% by mass or less. When the combined amount falls within the above range, the effects of the present invention can be sufficiently achieved.

Next, in the case of SBR contained as another rubber, the SBR preferably has a bound styrene content of 8% by mass or more, more preferably 10% by mass or more, but preferably 50% by mass or less, more preferably 46% by mass or less. When the bound styrene content is less than 8% by mass, insufficient wet-grip performance may be obtained. When the bound styrene content is more than 50% by mass, the polymer cannot be readily dispersed, and tensile strength or abrasion resistance may deteriorate.

The SBR preferably has a weight average molecular weight (Mw) of 700,000 or more, more preferably 800, 000 or more, still more preferably 900,000 or more, particularly preferably 1,000,000 or more. Conversely, although the upper limit of the Mw is not particularly limited, it is preferably 1,500,000 or less, more preferably 1,300,000 or less. When the Mw is less than 700,000, abrasion resistance may be reduced. When the Mw is more than 1,500,000, the polymer cannot be readily dispersed and cannot readily incorporate filler, so that mechanical strength tends to deteriorate.

The SBR preferably has a vinyl content of 5 mol% or more, more preferably 10 mol% or more, still more preferably 15 mol% or more, but preferably 60 mol% or less, more preferably 50 mol% or less. When the vinyl content falls within the above range, the effects of the present invention can be sufficiently achieved.

The SBR is not particularly limited, and examples include emulsion-polymerized SBR (E-SBR) and solution-polymerized SBR (S-SBR), which may or may not be oil-extended. In view of abrasion resistance, the SBR is preferably an oil-extended E-SBR, among others. Various oil-extended modified SBRs for silica (e.g. oil-extended SBRs having a polymer chain end or main chain modified with any of various modifiers) may also be used.

The oil-extended SBR is a styrene-butadiene rubber prepared by adding an extender component such as oil to styrene-butadiene rubber in the production of the polymer. Examples of the extender component are as described above. Aromatic oil, TDAE, naphthenic oil, MES, and S-RAE, among others, are preferred. In view of abrasion resistance, TDAE or aromatic oil is particularly preferred.

The level of oil extension of the oil-extended SBR (the amount of the oil component relative to 100 parts by mass of the SBR component) is not particularly limited. The level may be appropriately chosen and is usually 5 to 100 parts by mass, preferably 10 to 50 parts by mass.

The SBR may be prepared by known methods, such as anionic polymerization, solution polymerization, or emulsion polymerization, or may be a commercial product. Examples of the commercial products include Nipol 9548 available from Zeon Corporation and 0122 available from JSR Corporation.

In the case of the rubber composition containing any of the above-mentioned SBRs as another rubber, for use in winter tires requiring wet-grip performance, the amount of the SBR based on 100% by mass of the total rubber solids is preferably 10% by mass or more, more preferably 15% by mass or more, still more preferably 30% by mass or more, particularly preferably 35% by mass or more, while it is preferably 80% by mass or less, more preferably 70% by mass or less, still more preferably 50% by mass or less, particularly preferably 40% by mass or less. When the amount is less than 10% by mass, insufficient wet-grip performance may be obtained. When the amount is more than 80% by mass, grip performance on ice may deteriorate. When the SBR is an oil-extended SBR, the amount of the SBR refers to the amount of the SBR component (SBR solids) contained in the oil-extended SBR.

Herein, the cis content (the amount of cis-1,4-butadiene units) and the vinyl content (the amount of 1,2-butadiene units) in BR, and the vinyl content in SBR can be measured by infrared absorption spectrometry. The bound styrene content in SBR is determined by ¹H-NMR analysis. The weight average molecular weights (Mw) of BR and SBR can be determined by the method described in examples.

In the rubber composition, the blending ratio of the BR component contained in the oil-extended BR and the isoprene-based diene rubber [(mass of BR component)/(mass of isoprene-based diene rubber)] is preferably 20/80 to 80/20, more preferably 30/70 to 70/30, still more preferably 30/70 to 67/33. When the blending ratio is less than 20/80 or more than 80/20, a balanced reinforcement and crosslinking of the two polymer phases cannot be achieved and therefore the effects of the present invention tend not to be sufficiently achieved. For use in tires for light trucks, since the ground contact surface pressure per unit area of such tires is higher than that of tires for passenger vehicles and accordingly grip performance on ice is automatically increased, the BR may be used in a relatively small amount.

The rubber composition contains both silica and carbon black as fillers. Out of both fillers, silica tends to be readily incorporated into isoprene-based diene rubbers, while carbon black tends to be readily incorporated into BR. Accordingly, the combined use of the oil-extended BR, the isoprene-based diene rubber, silica, and carbon black can produce the effects of the present invention.

Non-limiting examples of the silica include dry silica (anhydrous silica) and wet silica (hydrous silica) . Wet silica (hydrous silica) is preferred because it has many silanol groups.

The silica preferably has a nitrogen adsorption specific surface area (N₂SA) of 80 m²/g or more, more preferably 100 m²/g or more, but preferably 280 m²/g or less, more preferably 250 m²/g or less. When the N₂SA falls within the above range, the effects of the present invention can be sufficiently achieved.

The N₂SA of the silica is measured in accordance with ASTM D3037-81.

Examples of the carbon black include GPF, FEF, HAF, ISAF, and SAF.

The carbon black preferably has a nitrogen adsorption specific surface area (N₂SA) of 50 m²/g or more, more preferably 100 m²/g or more, still more preferably 130 m²/g or more, but preferably 250 m²/g or less, more preferably 230 m²/g or less, still more preferably 180 m²/g or less. When the N₂SA is less than 50 m²/g, abrasion resistance may be reduced. When the N₂SA is more than 250 m²/g, sufficient processability may not be obtained.

The N₂SA of the carbon black is determined in accordance with JIS K 6217-2:2001.

The amount of silica relative to 100 parts by mass of the total rubber solids is 15 parts by mass or more, preferably 20 parts by mass or more, while it is 125 parts by mass or less, preferably 118 parts by mass or less. If the amount is less than 15 parts by mass, the complex elastic modulus (E*) at small strains (ranging from 0.1% to 0.5%) may be so high that sufficient grip performance on ice or reinforcing properties (abrasion resistance) cannot be obtained. If the amount is more than 125 parts by mass, the filler content is too high to readily disperse the fillers, with the result that elongation at break (chipping resistance) or abrasion resistance may be reduced.

The amount of carbon black relative to 100 parts by mass of the total rubber solids is 3 parts by mass or more, preferably 5 parts by mass or more, while it is 70 parts by mass or less, preferably 65 parts by mass or less. If the amount is less than 3 parts by mass, a small amount of filler will be incorporated into the oil-extended BR, so that sufficient abrasion resistance may not be obtained and the rubber may have greatly reduced resistance to degradation by ultraviolet rays. If the amount is more than 70 parts by mass, grip performance on ice and wet-grip performance may be reduced.

The combined amount of silica and carbon black, relative to 100 parts by mass of the total rubber solids is 45 parts by mass or more, preferably 60 parts by mass or more, more preferably 65 parts by mass or more, while it is 130 parts by mass or less, preferably 125 parts by mass or less, more preferably 120 parts by mass or less. If the combined amount is less than 45 parts by mass, grip performance on ice and abrasion resistance may be reduced. If the combined amount is more than 130 parts by mass, chipping resistance or abrasion resistance may be reduced.

The ratio of incorporated silica and carbon black (silica/carbon black ratio by mass) is preferably 20/80 to 96/4, more preferably 25/75 to 85/15. When the ratio is less than 20/80 or more than 96/4, a balanced reinforcement and crosslinking of the two polymer phases cannot be achieved and therefore abrasion resistance or grip performance on ice may be reduced.

The rubber composition preferably contains a silane coupling agent. Examples of the silane coupling agents include sulfur (sulfide bond)-containing compounds, such as sulfide silane coupling agents, mercapto silane coupling agents, vinyl silane coupling agents, amino silane coupling agents, glycidoxy silane coupling agents, nitro silane coupling agents, and chloro silane coupling agents. Specific examples of commercial silane coupling agents include Si69, Si75, and Si363 available from Evonik, and NXT and NXTZ available from Momentive.

The amount of silane coupling agent relative to 100 parts by mass of silica is preferably 1 part by mass or more, more preferably 3 parts by mass or more. When the amount is less than 1 part by mass, abrasion resistance or fuel economy tends to deteriorate. The amount of silane coupling agent is preferably 15 parts by mass or less, more preferably 12 parts by mass or less. When the amount is more than 15 parts by mass, the silane coupling agent tends to be consumed in the crosslinking of polymers, thereby resulting in an increase in crosslink density. Thus, an effect commensurate with the increase in cost tends not to be obtained.

The rubber composition usually contains a crosslinking agent such as sulfur or a hybrid crosslinking agent. The sulfur may be one commonly used in the rubber industry, such as powdered sulfur, precipitated sulfur, colloidal sulfur, insoluble sulfur, highly dispersible sulfur, or soluble sulfur, with powdered sulfur being suitable, among others. Examples of the hybrid crosslinking agents include commercial products such as KA9188 and Duralink HTS. The crosslinking agent may be one type of sulfur, hybrid crosslinking agent or the like, or a combination of two or more types thereof. Combinations of sulfur and hybrid crosslinking agents may also be used.

In the rubber composition, the total amount of sulfur derived from crosslinking agents, relative to 100 parts by mass of the total rubber solids, is preferably 0.5 to 1.4 parts by mass. When the total amount of sulfur derived from crosslinking agents falls within the above range, abrasion resistance can be further improved. Moreover, in this case, hardening of the tread rubber can be sufficiently suppressed in winter tires such as studless winter tires, which are generally stored in warehouses or the like in summer. The total amount of sulfur derived from crosslinking agents is more preferably 0.6 parts by mass or more, still more preferably 0.65 parts by mass or more, while it is more preferably 1.2 parts by mass or less, still more preferably 1.0 part by mass or less, particularly preferably 0.8 parts by mass or less. When the total amount is less than 0.5 parts by mass, vulcanizate hardness (Hs) or co-curing with neighboring rubber compounds may be insufficient. When the total amount is more than 1.4 parts by mass, abrasion resistance tends to be reduced, and grip performance on ice and elongation at break may deteriorate.

The total amount of sulfur derived from crosslinking agents refers to the net sulfur content in the entire crosslinking agents introduced in the final kneading. For example, when insoluble sulfur (containing oil) is used as a crosslinking agent, it means the net sulfur content, excluding the oil content.

In the rubber composition, the amount of additional oil to be added separately from the oil contained in the oil-extended BR and other oil-extended rubbers such as oil-extended SBR is preferably 35 parts by mass or less, more preferably 30 parts by mass or less, still more preferably 25 parts by mass or less, relative to 100 parts by mass of the total rubber solids, although no additional oil may be incorporated. The use of the oil-extended rubber together with a resin and the like described later allows for a reduction in the amount of oil separately added as a process oil, as a result of which slippage on kneading rotors and slippage between the polymer phases can be suppressed during processing, and the polymer phases (the rubber component) can be readily mixed with each other.

The type of additional oil may be as described for the oil to be added as an extender component in the oil-extended BR or oil-extended SBR.

The rubber composition may contain a resin conventionally used in rubber compositions for tires. Any type of resin may be used, and examples include coumarone-based resins such as coumarone-indene resin, aromatic terpene resins, terpene phenolic resins, aromatic vinyl polymers (resins obtained by polymerizing α-methylstyrene and/or styrene), terpene-based resins, and rosin-based resins. In view of improving grip performance on ice, terpene-based resins are preferred among these. The coumarone-based resins can be expected to improve tensile strength and abrasion resistance.

Examples of the terpene-based resins include polyterpene resins obtained by polymerizing terpene compounds, and aromatic modified terpene resins obtained by polymerizing terpene compounds and aromatic compounds. Hydrogenated products of these resins may also be used.

The polyterpene resin refers to a resin obtained by polymerizing a terpene compound. The terpene compound refers to a hydrocarbon having a composition represented by (C₅H₈)ₙ or an oxygen-containing derivative thereof, which has a terpene backbone and is classified as a monoterpene (C₁₀H₁₆), a sesquiterpene (C₁₅H₂₄), a diterpene (C₂₀H₃₂) or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resin, limonene resin, dipentene resin, and pinene-limonene resin. Among these, pinene resin is preferred because of its ease in polymerization reaction and its inexpensive raw material, natural pine resin. Pinene resin usually contains both α-pinene and β-pinene which are structural isomers of pinene, and is classified into β-pinene resin mainly containing β-pinene and α-pinene resin mainly containing α-pinene, depending on the type of component contained therein. In the present invention, β-pinene resin can be suitably used.

Examples of the aromatic modified terpene resins include terpene phenolic resins made from the above-mentioned terpene compounds and phenolic compounds; and terpene styrene resins made from the above-mentioned terpene compounds and styrenic compounds. Also, terpene phenol styrene resins made from the above-mentioned terpene compounds, phenolic compounds, and styrenic compounds may be used. Examples of the phenolic compounds include phenol, bisphenol A, cresol, and xylenol. Moreover, examples of the styrenic compounds include styrene and α-methylstyrene.

The terpene-based resin is preferably a polyterpene resin, more preferably β-pinene resin, because these resins allow the effects of the present invention to be particularly well achieved.

The terpene-based resin preferably has a softening point of 104°C to 126°C. Such a terpene-based resin having a specific softening point range will be selectively distributed to the isoprene-based diene rubber phase in the rubber composition, and thus will not deteriorate the low temperature plasticity of the oil-extended BR. In contrast, when the terpene-based resin has a softening point outside the above range, the effects of improving grip performance on ice, abrasion resistance, and mechanical strength tend to be insufficient. The softening point of the terpene-based resin is more preferably 106°C or higher, still more preferably 110°C or higher, while it is more preferably 124°C or lower, still more preferably 120°C or lower.

The softening point of the terpene-based resin is measured in accordance with JIS K 6220-1:2001 using a ring and ball softening point measuring apparatus and is defined as the temperature at which the ball drops down.

The terpene-based resin preferably has a hydroxyl value (mgKOH/g-gel) of 20 or less, more preferably 15 or less, still more preferably 5 or less, particularly preferably 1 or less, most preferably 0. When the hydroxyl value is more than 20, the effects of improving grip performance on ice, abrasion resistance, and mechanical strength tend to be insufficient.

The hydroxyl value of the terpene-based resin refers to the amount in milligram of potassium hydroxide required to neutralize the acetic acid bonded to hydroxyl groups on acetylation of 1 g of the terpene-based resin, and is measured by potentiometric titration (JIS K 0070:1992). Accordingly, the hydroxyl value of terpene-based resins containing no phenolic compound is usually 0.

When the resin is incorporated, the amount of the resin relative to 100 parts by mass of the total rubber solids is preferably 1 to 50 parts by mass. When the amount is outside the above range, the effects of improving the properties tend not be obtained, or the properties rather tend to deteriorate. The amount of the resin is more preferably 2 parts by mass or more, still more preferably 5 parts by mass or more, while it is more preferably 30 parts by mass or less, still more preferably 25 parts by mass or less.

The rubber composition preferably contains aluminum hydroxide in order to improve grip performance on ice. Any type of aluminum hydroxide can be used, including those commonly used in the tire industry. Aluminum hydroxide is partially converted to alumina having a Mohs hardness equal to or higher than that of silica or attached and fixed to silica during kneading. As a result, the resulting alumina aggregates or aluminum hydroxide can be expected to produce an anchoring effect to improve grip performance on ice.

The aluminum hydroxide preferably has an average particle size of 0.69 µm or less, more preferably 0.65 µm or less, still more preferably 0.62 µm or less, but preferably 0.20 µm or more, more preferably 0.25 µm or more, to provide good abrasion resistance and good grip performance on ice. The aluminum hydroxide having an average particle size of more than 0.69 µm tends to be separated and thereby result in deterioration of abrasion resistance, while the aluminum hydroxide having an average particle size of less than 0.20 µm may be embedded in the rubber upon contacting the ground and thereby fail to contribute to improving grip performance on ice.

The average particle size of aluminum hydroxide refers to a number average particle size which is measured with a transmission electron microscope.

The aluminum hydroxide preferably has a nitrogen adsorption specific surface area (N₂SA) of 10 m²/g or more, more preferably 14 m²/g or more, still more preferably 20 m²/g or more, but preferably 120 m²/g or less, more preferably 60 m²/g or less, still more preferably 50 m²/g or less, particularly preferably 45 m²/g or less, to provide good abrasion resistance and good grip performance on ice. The aluminum hydroxide having an N₂SA of less than 10 m²/g may not have a sufficient effect for improving grip performance on ice or abrasion resistance, while the aluminum hydroxide having an N₂SA of more than 120 m²/g has so small a particle size that it may be embedded in the rubber upon contacting the ground and thereby fail to contribute to improving grip performance on ice, or may self-aggregate and thereby fail to exert its effect.

The N₂SA of aluminum hydroxide is measured by the BET method in accordance with ASTM D3037-81.

When the aluminum hydroxide is incorporated, the amount of aluminum hydroxide relative to 100 parts by mass of the total rubber solids is preferably 1 part by mass or more, more preferably 2 parts by mass or more, still more preferably 3 parts by mass or more. When the amount is less than 1 part by mass, the improving effect of aluminum hydroxide tends to be insufficient. The amount of aluminum hydroxide is preferably 60 parts by mass or less, more preferably 50 parts by mass or less, still more preferably 40 parts by mass or less. When the amount is more than 60 parts by mass, sufficient abrasion resistance may not be ensured.

Thus, it is another preferred embodiment of the present invention that the rubber composition in the present invention further contains a terpene-based resin having a softening point of 104°C to 126°C and/or an aluminum hydroxide having a nitrogen adsorption specific surface area of 10 to 60 m²/g in order to improve grip performance on ice.

In addition to the above-described components, the rubber composition may incorporate appropriate compounding agents commonly used in production of rubber compositions, such as zinc oxide, stearic acid, a processing aid, an antioxidant, wax, or a vulcanization accelerator.

The rubber composition in the present invention can be prepared by conventionally known methods, such as the method described below.

For example, first, the components other than crosslinking agents and vulcanization accelerators are compounded (added) and kneaded in a rubber kneading machine such as a Banbury mixer or an open roll mill (base kneading step) to give a kneaded mixture. Then, a crosslinking agent and a vulcanization accelerator are incorporated (added) into the kneaded mixture and kneaded (F-kneading), followed by vulcanization, whereby a rubber composition can be prepared. The rubber composition is used in treads of tires.

The base kneading step is not particularly limited as long as the rubber component and other components are kneaded. The base kneading step may be a single step, or alternatively may be divided into a series of steps such as: X-kneading in which the rubber component, 1/2 silica, carbon black, and 1/2 silane coupling agent are kneaded, and Y-kneading in which the kneaded mixture obtained by X-kneading, the remaining silica, the remaining silane coupling agent, and the other components, excluding crosslinking agents and vulcanization accelerators, are kneaded.

The winter tire of the present invention can be produced from the rubber composition by usual methods.

Specifically, the rubber composition prepared by compounding the components, before vulcanization, is extruded and processed into the shape of a tread and then assembled with other tire components on a tire building machine in a usual manner to build an unvulcanized tire. The unvulcanized tire is heated and pressurized in a vulcanizer to give a tire. In this way, a winter tire including a tread that incorporates the above components is produced.

The winter tire of the present invention can be suitably used as a studless winter tire, a snow tire, a studded tire, or the like for passenger vehicles, large passenger vehicles, large SUVs, light trucks, trucks, buses, and the like.

### EXAMPLES

The present invention is specifically described with reference to, but not limited to, examples below.

The physical properties of the polymers prepared below are measured as follows.

### [Cis content]

The cis content was measured by infrared absorption spectrometry.

### [Weight average molecular weight (Mw)]

The weight average molecular weight (Mw) was measured by gel permeation chromatography (GPC) under the following conditions (1) to (8).
(1) Apparatus: HLC-8220 available from Tosoh Corporation
(2) Separation column: HM-H available from Tosoh Corporation, two columns in series
(3) Measurement temperature: 40°C
(4) Carrier: tetrahydrofuran
(5) Flow rate: 0.6 mL/min
(6) Injection volume: 5 µL
(7) Detector: differential refractometer
(8) Molecular weight standards: polystyrene standards

### [Vinyl content]

The vinyl content was measured by infrared absorption spectrometry.

### [Bound styrene content]

The bound styrene content was measured with an NMR analyzer of JNM-ECA series available from Jeol Ltd.

### <Preparation of terminal modifier>

An amount of 20.8 g of 3-(N,N-dimethylamino)-propyltrimethoxysilane (AZmax. Co) was put in a 250 mL graduated flask in a nitrogen atmosphere, and anhydrous hexane (Kanto Chemical Co., Inc.) was then added to a total amount of 250 mL, whereby a terminal modifier was prepared.

### <Production Example 1 (modified BR)>

An amount of 18 L of cyclohexane (Kanto Chemical Co., Inc.), 2, 000 g of butadiene (TAKACHIHO TRADING CO., LTD.), and 53 mmol of diethyl ether (Kanto Chemical Co., Inc.) were charged into a 30 L pressure-proof vessel sufficiently purged with nitrogen, followed by warming to 60°C. Next, 16.6 mL of butyllithium (Kanto Chemical Co., Inc.) was added, followed by stirring for 3 hours. Then, 12 mL of a 0.4 mol/L solution of silicon tetrachloride in hexane was added and stirred for 30 minutes. Thereafter, 13 mL of the terminal modifier was added and stirred for 30 minutes. To the reaction solution was added 0.2 g of 2,6-tert-butyl-p-cresol (Ouchi Shinko Chemical Industrial Co., Ltd.) in 2 mL of methanol (Kanto Chemical Co., Inc.). The resulting reaction solution was put into a stainless steel vessel containing 18 L of methanol and then aggregates were collected. The aggregates were dried under reduced pressure for 24 hours to obtain a modified BR (BR 5). The modified BR had a cis content of 38 mol%, a Mw of 420, 000, and a vinyl content of 13 mol%.

### <Production Example 2 (modified SBR)>

An amount of 18 L of n-hexane, 740 g of styrene (Kanto Chemical Co., Inc.), 1,260 g of butadiene, and 17 mmol of tetramethylethylenediamine were charged into a 30 L pressure-proof vessel sufficiently purged with nitrogen, followed by warming to 40°C. Next, 10.5 mL of butyllithium was added and then the temperature was raised to 50°C, followed by stirring for 3 hours. Then, 3.5 mL of a 0.4 mol/L solution of silicon tetrachloride in hexane was added and stirred for 30 minutes. Thereafter, 30 mL of the terminal modifier was added and stirred for 30 minutes. To the reaction solution was added 0.2 g of 2,6-tert-butyl-p-cresol (Ouchi Shinko Chemical Industrial Co., Ltd.) in 2 mL of methanol (Kanto Chemical Co. , Inc.). The resulting reaction solution was put into a stainless steel vessel containing 18 L of methanol and then aggregates were collected. The aggregates were dried under reduced pressure for 24 hours to obtain a modified SBR (SBR 2). The modified SBR had a bound styrene content of 37.5% by mass, a Mw of 925,000, and a vinyl content of 55.8 mol%.

The various chemicals used in examples and comparative examples are collectively listed below.
NR: TSR20
IR: IR2200 available from JSR Corporation
BR 1: BUNA-CB24 (Nd-catalyzed BR synthesized using a Nd catalyst, non-oil-extended, cis content: 97 mol%) available from Lanxess
BR 2: BR133P (Co-catalyzed BR synthesized using a Co catalyst, oil-extended (paraffin oil), 37.5 parts by mass of paraffin oil per 100 parts by mass of rubber component, vinyl content: 2 mol%, cis content: 96 mol%, Mw: 400,000) available from Ube Industries, Ltd.
BR 3: BUNA-CB29 TDAE (Nd-catalyzed BR, oil-extended) available from Lanxess
BR 4: BUNA-CB29 MES (Nd-catalyzed BR, oil-extended) available from Lanxess
BR 5: Modified BR for silica (non-oil-extended, vinyl content: 13 mol%, cis content: 38 mol%, Mw: 420,000) prepared in Production Example 1
SBR 1: Nipol 9548 (E-SBR, oil-extended, 37.5% by mass of oil per 100 parts by mass of rubber component, bound styrene content: 35% by mass, vinyl content: 18 mol%, Mw: 1,085,000) available from Zeon Corporation
SBR 2: Modified SBR for silica (non-oil-extended, bound styrene content: 37.5% by mass, vinyl content: 55.8 mol%, Mw: 925,000) prepared in Production Example 2
Carbon black 1: SHOBLACK N220 (N₂SA: 114 m²/g) available from Cabot Japan K.K.
Carbon black 2: SHOBLACK N134 (N₂SA: 148 m²/g) available from Cabot Japan K.K.
Silica 1: Zeosil 1085Gr (N₂SA: 90 m²/g) available from Rhodia
Silica 2: ULTRASIL VN3 (N₂SA: 175 m²/g) available from Evonik
Resin 1: NOVARES C10 (liquid coumarone-indene resin, softening point: 5°C to 15°C) available from Rutgers Chemicals
Resin 2: SYLVARES SA85 (copolymer of α-methylstyrene and styrene, softening point: 85°C, Mw: 1,000) available from Arizona chemical
Resin 3: Sylvares TR5147 (polyterpene resin (limonene resin), softening point: 115°C, hydroxyl value: about 0) available from Arizona Chemical
Resin 4: YS resin PX1150N (β-pinene resin, softening point: 115°C, hydroxyl value: about 0) available from Yasuhara Chemical Co., Ltd.
Resin 5: YS resin TO115 (terpene styrene resin, softening point: 115°C, hydroxyl value: about 0) available from Yasuhara Chemical Co., Ltd.
Aluminum hydroxide 1: Dry ground ATH#B (average particle size: 0.15 µm, N₂SA: 61 m²/g)
Aluminum hydroxide 2: Dry ground ATH#B (average particle size: 0.25 µm, N₂SA: 45 m²/g)
Aluminum hydroxide 3: ATH#B (average particle size: 0.6 µm, N₂SA: 15 m²/g) available from Sumitomo Chemical Co., Ltd.
Aluminum hydroxide 4: HIGILITE H43 (average particle size: 0.75 µm, N₂SA: 6.7 m²/g) available from Showa Denko K.K.
Paraffin oil: P200 available from JX Nippon Oil & Energy Corporation
TDAE oil: VivaTec 400 available from H&R
Wax: Oxoace 355 available from Nippon Seiro Co., Ltd.
6PPD: Antigene 6C (N-phenyl-N'-(1,3-dimethylbutyl)-p-phenylenediamine) available from Sumitomo Chemical Co., Ltd.
TMQ: NOCRAC 224 (2,2,4-trimethyl-1,2-dihydroquinoline polymer) available from Ouchi Shinko Chemical Industrial Co., Ltd.
Stearic acid: Stearic acid "Tsubaki" available from NOF Corporation
Zinc oxide: Ginrei R available from Toho Zinc Co., Ltd.
Silane coupling agent: Si75 (bis(3-triethoxysilyl-propyl)disulfide) available from Evonik Degussa
5% oil-containing powdered sulfur: HK-200-5 available from Hosoi Chemical Industry Co., Ltd.
TBBS: NOCCELER NS-G (N-tert-butyl-2-benzothiazolylsulfenamide) available from Ouchi Shinko Chemical Industrial Co., Ltd.
DPG: NOCCELER D (diphenylguanidine) available from Ouchi Shinko Chemical Industrial Co., Ltd.
Hybrid crosslinking agent: Vulcuren VP KA9188 (1,6-bis(N,N'-dibenzylthiocarbamoyldithio)hexane) (sulfur content: 20.6%) available from Lanxess

Tables 1 and 2 below collectively show the physical properties of the BRs 1 to 5 and SBRs 1 and 2.

**[Table 1]**

| | Oil-extended/ Non-oil-extended | Extender component | Amount of oil relative to 100 parts by mass of rubber component (parts by mass) | Catalyst used in synthesis | Cis content (mol%) | Vinyl content (mol%) | Weight average molecular weight (Mw) | Remarks |
|---|---|---|---|---|---|---|---|---|
| BR 1 | Non-oil-extended | - | - | Nd | 97 | 0.7 | 541,000 | Lanxess |
| BR 2 | Oil-extended | Paraffin oil | 37.5 | Co | 96 | 2 | 400,000 | Ube Industries, Ltd. |
| BR 3 | Oil-extended | TDAE | 37.5 | Nd | 95.8 | 0.4 | 760,000 | Lanxess |
| BR 4 | Oil-extended | MES | 37.5 | Nd | 96.1 | 0.4 | 737,000 | Lanxess |
| BR 5 | Non-oil-extended | - | - | Li | 38 | 13 | 420,000 | Production Example 1 |

**[Table 2]**

| | Oil-extended/ Non-oil-extended | Extender component | Amount of oil relative to 100 parts by mass of rubber component (parts by mass) | Type of SBR | Bound styrene content (mass%) | Vinyl content (mol%) | Weight average molecular weight (Mw) | Remarks |
|---|---|---|---|---|---|---|---|---|
| SBR 1 | Oil- extended. | TDAE | 37.5 | E-SBR | 35 | 18 | 1,085,000 | Zeon Corporation |
| SBR 2 | Non-oil-extended | - | - | Modified SBR for silica | 37.5 | 55.8 | 925,000 | Production Example 2 |

### <Examples and Comparative Examples>

According to the formulations shown in Tables 3 to 5, the total amounts of the rubber component and the carbon black and one-half of the amounts of the silica and the silane coupling agent were first kneaded using a Banbury mixer at 150°C for 5 minutes (X-kneading). Then, the rest of the silica and the silane coupling agent, and the remaining materials (antioxidant, zinc oxide, resin, etc.) other than the crosslinking agent and the vulcanization accelerators were added and kneaded at 150°C for 4 minutes (Y-kneading), thereby obtaining a kneaded mixture. Then, the crosslinking agent and the vulcanization accelerators were added to the kneaded mixture, and they were kneaded using an open two roll mill at 105°C for 4 minutes (F-kneading) to prepare an unvulcanized rubber composition.

The unvulcanized rubber composition was press-vulcanized at 170°C for 12 minutes to prepare a vulcanized rubber composition.

Separately, the unvulcanized rubber composition was extruded into the shape of a tread and assembled with other tire components on a tire building machine, followed by vulcanization at 170°C for 12 minutes to prepare a test winter tire (tire size: 195/65R15, tire for passenger vehicles).

The vulcanized rubber compositions and test winter tires thus prepared were evaluated on the following items. Tables 3 to 5 show the results.

### (Hardness (Hs))

The hardness (shore A) of the vulcanized rubber composition at 25°C was determined using a type-A durometer in accordance with JIS K 6253 "Rubber, vulcanized or thermoplastic - Determination of hardness".

To ensure safety (handling stability), the formulations of the examples and comparative examples were adjusted to a certain hardness range (52 ± 1) at 25°C. Adjusting the hardness to a certain range permits a proper comparison of the tensile strength, wet-grip performance, and abrasion resistance.

### (Tensile test)

No. 3 dumbbell-shaped test pieces prepared from the vulcanized rubber composition was subjected to a tensile test at room temperature in accordance with JIS K 6251 "Rubber, vulcanized or thermoplastic - Determination of tensile stress-strain properties" to measure the elongation at break EB (%). The EB values are expressed as an index, with Comparative Example 1 set equal to 100. A higher index indicates a higher mechanical strength and better durability, and an index of 95 or higher means practically acceptable mechanical strength.

### (Wet-grip performance)

The test winter tires were mounted on a front-engine, rear-wheel-drive passenger vehicle of 2,000 cc displacement made in Japan. A test driver drove the vehicle 10 laps around a test track with wet asphalt road conditions and evaluated control stability during the steering of the vehicle. The results are expressed as an index, with Comparative Example 1 set equal to 100. A higher index indicates better wet-grip performance, and an index of 95 or higher means practically acceptable wet-grip performance.

It should be noted that since wet-grip performance is known to show a similar tendency to grip performance on ice, winter tires having excellent wet-grip performance can be considered to have excellent grip performance on ice as well.

### (Abrasion resistance)

The test winter tires were mounted on a front-engine, rear-wheel-drive passenger vehicle of 2,000 cc displacement made in Japan. The vehicle was driven on a test track with dry asphalt road conditions, and then the remaining groove depth in the tire tread rubber was measured (initial depth: 8.0 mm) . The remaining groove depths are expressed as an index, with Comparative Example 1 set equal to 100. A higher index indicates better abrasion resistance, and an index of 105 or higher means an abrasion resistance superior to that of Comparative Example 1; further, an index of 120 or higher is considered as particularly excellent abrasion resistance.

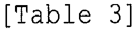

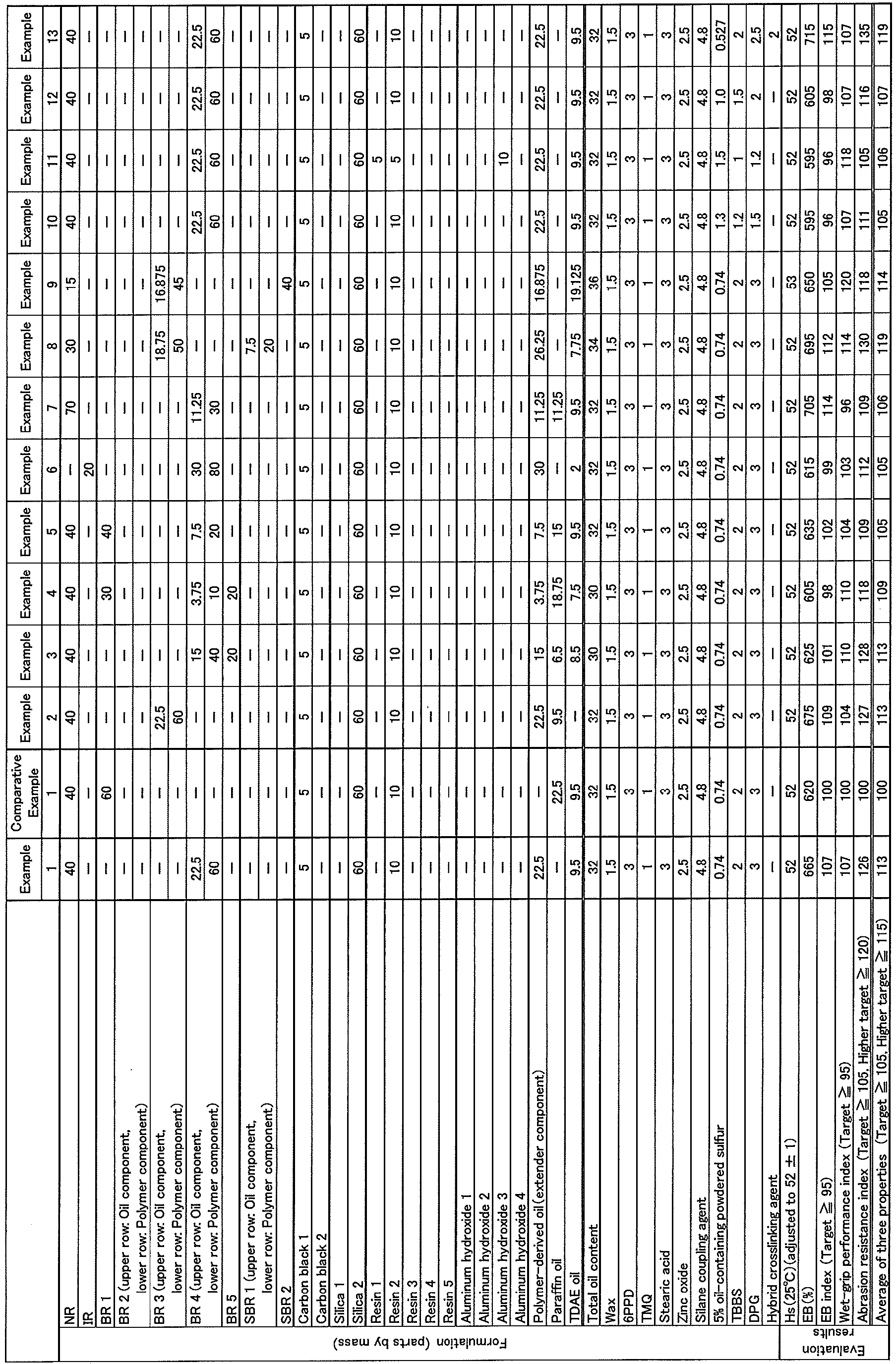

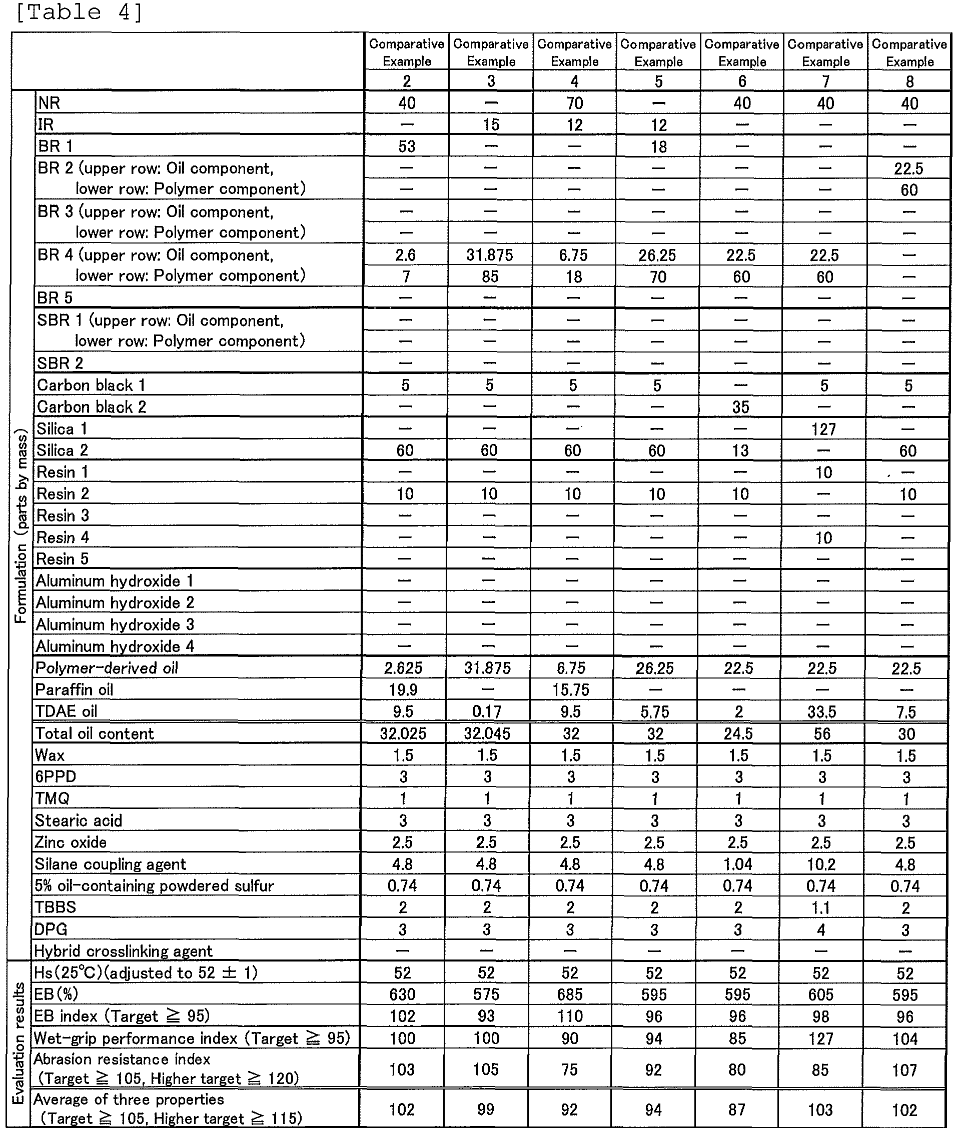

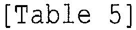

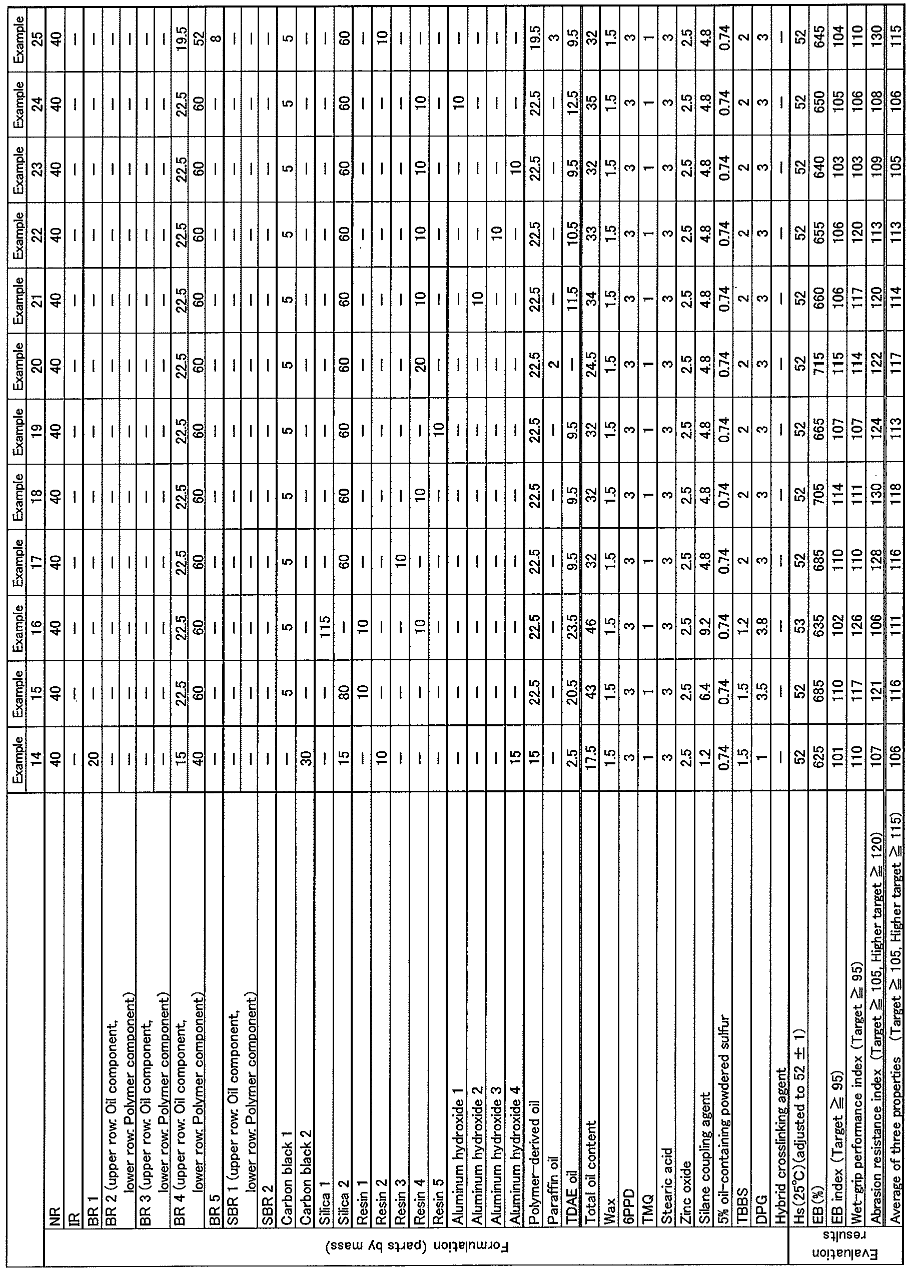

The term "Average of three properties" in Tables 3 to 5 refers to the average of the following three indexes: EB index, wet-grip performance index, and abrasion resistance index. An average of 105 or higher is considered as a balanced improvement in the three properties; further, an average of 115 or higher is considered to indicate that the three properties are particularly excellent and balanced.

The results in Tables 3 to 5 demonstrate that a balanced improvement in grip performance on ice, abrasion resistance, and mechanical strength was achieved in the examples using rubber compositions each of which contained predetermined amounts of a specific oil-extended polybutadiene rubber, an isoprene-based diene rubber, silica, and carbon black. In particular, it is demonstrated that the "Average of three properties" was 115 or higher and thus the three properties: grip performance on ice, abrasion resistance, and mechanical strength were particularly excellent and balanced in the examples where the amount of the polybutadiene rubber component contained in the specific oil-extended polybutadiene rubber according to the present invention was 35% to 65% by mass based on 100% by mass of the total rubber solids.

## Claims

1. A winter tire, comprising a tread formed from a rubber composition,
the rubber composition comprising:
an oil-extended polybutadiene rubber having a cis content of 95 mol% or more, a vinyl content of 1 mol% or less, and a weight average molecular weight of 530,000 or more;
an isoprene-based diene rubber;
silica; and
carbon black,
the oil-extended polybutadiene rubber being synthesized using a rare earth catalyst,
the rubber composition comprising, based on 100% by mass of the total rubber solids, 8% to 80% by mass of a polybutadiene rubber component contained in the oil-extended polybutadiene rubber and 13% to 80% by mass of the isoprene-based diene rubber,
the rubber composition comprising, relative to 100 parts by mass of the total rubber solids, 15 to 125 parts by mass of the silica and 3 to 70 parts by mass of the carbon black, provided that a combined amount of the silica and the carbon black is 45 to 130 parts by mass,
wherein said winter tire is not a winter tire comprising a tread formed from a rubber composition comprising:
an oil extended polybutadiene rubber having a cis content of 95 mol% or more, a vinyl content of 1 mol% or less, and
a weight average molecular weight of 530,000 or more;
a styrene-butadiene rubber having a bound styrene content of 30 to 50% by mass, determined by 1H-NMR analysis, and a weight average molecular weight of 700,000 or more; an isoprene-based diene rubber;
silica; and
carbon black,
the oil-extended polybutadiene rubber being synthesized using a rare earth catalyst, the rubber composition comprising, based on 100% by mass of rubber solids, 10 to 67% by mass of a polybutadiene rubber component contained in the oil-extended polybutadiene rubber, 10 to 50% by mass of the styrene-butadiene rubber, and 13 to 30% by mass of the isoprene-based diene rubber, the rubber composition comprising, relative to 100 parts by mass of the total rubber solids, 15 to 125 parts by mass of the silica and 3 to 70 parts by mass of the carbon black, provided that a combined amount of the silica and carbon black is 60 to 130 parts by mass.

2. The winter tire according to claim 1,
wherein the rubber composition has a total amount of sulfur derived from crosslinking agents of 0.5 to 1.4 parts by mass relative to 100 parts by mass of the total rubber solids.

3. The winter tire according to claim 1 or 2,
wherein the oil-extended polybutadiene rubber has a weight average molecular weight of 700,000 or more.

4. The winter tire according to any one of claims 1 to 3,
wherein the rubber composition further comprises at least one of a terpene-based resin having a softening point measured in accordance with JIS K 6220-1:2001 of 104°C to 126°C or an aluminum hydroxide having a nitrogen adsorption specific surface area of 10 to 60 m²/g.

5. The winter tire according to any one of claims 1 to 4,
wherein the rubber composition comprises, based on 100% by mass of the total rubber solids, 20% to 70% by mass of the polybutadiene rubber component contained in the oil-extended polybutadiene rubber and 30% or more to 70% by mass of the isoprene-based diene rubber.

6. The winter tire according to claim 2,
wherein the total amount of sulfur derived from crosslinking agents is 0.5 to 1.0 part by mass relative to 100 parts by mass of the total rubber solids.

## Patentansprüche

1. Winterreifen, umfassend einen Laufstreifen, der aus einer Kautschukzusammensetzung gebildet ist,
wobei die Kautschukzusammensetzung umfasst:
einen ölverstreckten Polybutadienkautschuk mit einem cis-Gehalt von 95 Molprozent oder mehr, einem Vinylgehalt von 1 Molprozent oder weniger und einem gewichtsmittleren Molekulargewicht von 530000 oder mehr;
einen Isopren-basierten Dienkautschuk;
Siliciumdioxid; und
Ruß,
wobei der ölverstreckte Polybutadienkautschuk unter Verwendung eines Seltenerd-Katalysators synthetisiert ist,
wobei die Kautschukzusammensetzung, bezogen auf 100 Massenprozent der gesamten Kautschukfeststoffe, 8 bis 80 Massenprozent einer im ölverstreckten Polybutadienkautschuk enthaltenen Polybutadienkautschuk-Komponente und 13 bis 80 Massenprozent des Isopren-basierten Dienkautschuks umfasst,
wobei die Kautschukzusammensetzung, bezogen auf 100 Massenteile der gesamten Kautschukfeststoffe, 15 bis 125 Massenteile des Siliciumdioxids und 3 bis 70 Massenteile des Rußes umfasst, mit der Maßgabe, dass eine Gesamtmenge des Siliciumdioxids und des Rußes 45 bis 130 Massenteile beträgt,
wobei der Winterreifen kein Winterreifen ist, der einen Laufstreifen umfasst, welcher aus einer Kautschukzusammensetzung gebildet ist, die umfasst:
einen ölverstreckten Polybutadienkautschuk mit einem cis-Gehalt von 95 Molprozent oder mehr, einem Vinylgehalt von 1 Molprozent oder weniger und einem gewichtsmittleren Molekulargewicht von 530000 oder mehr;
einem Styrol-Butadien-Kautschuk mit einem Gehalt an gebundenem Styrol von 30 bis 50 Massenprozent, bestimmt durch ¹H-NMR-Analyse, und einem gewichtsmittleren Molekulargewicht von 700000 oder mehr;
einen Isopren-basierten Dienkautschuk;
Siliciumdioxid; und
Ruß,
wobei der ölverstreckte Polybutadienkautschuk unter Verwendung eines Seltenerd-Katalysators synthetisiert ist, die Kautschukzusammensetzung, bezogen auf 100 Massenprozent der Kautschukfeststoffe, 10 bis 67 Massenprozent einer im ölverstreckten Polybutadienkautschuk enthaltenen Polybutadienkautschuk-Komponente, 10 bis 50 Massenprozent des Styrol-Butadien-Kautschuks und 13 bis 30 Massenprozent des Isopren-basierten Dienkautschuks umfasst, wobei die Kautschukzusammensetzung, bezogen auf 100 Massenteile der gesamten Kautschukfeststoffe, 15 bis 125 Massenteile des Siliciumdioxids und 3 bis 70 Massenteile des Rußes umfasst, mit der Maßgabe, dass eine Gesamtmenge dass eine Gesamtmenge des Siliciumdioxids und des Rußes 60 bis 130 Massenteile beträgt.

2. Winterreifen nach Anspruch 1,
wobei die Kautschukzusammensetzung eine Gesamtmenge an aus Vernetzungsmitteln stammendem Schwefel von 0,5 bis 1,4 Massenteilen, bezogen auf 100 Massenteile der gesamten Kautschukfeststoffe, aufweist.

3. Winterreifen nach Anspruch 1 oder 2,
wobei der ölverstreckte Polybutadienkautschuk ein gewichtsmittleres Molekulargewicht von 700000 oder mehr aufweist.

4. Winterreifen nach einem der Ansprüche 1 bis 3,
wobei die Kautschukzusammensetzung zudem mindestens eines von einem Terpen-basierten Harz mit einem gemäß JIS K 6220-1:2001 gemessenen Erweichungspunkt von 104 °C bis 126 °C oder einem Aluminiumhydroxid mit einer spezifischen Stickstoffadsorptions-Oberfläche von 10 bis 60 m²/g umfasst.

5. Winterreifen nach einem der Ansprüche 1 bis 4,
wobei die Kautschukzusammensetzung, bezogen auf 100 Massenprozent der gesamten Kautschukfeststoffe, 20 bis 70 Massenprozent der im ölverstreckten Polybutadienkautschuk enthaltenen Polybutadienkautschuk-Komponente und 30 oder mehr bis 70 Massenprozent des Isopren-basierten Dienkautschuks umfasst.

6. Winterreifen nach Anspruch 2,
wobei die Gesamtmenge an aus Vernetzungsmitteln stammendem Schwefel, bezogen auf 100 Massenteile der gesamten Kautschukfeststoffe, 0,5 bis 1,0 Massenteile beträgt.

## Revendications

1. Pneu neige, comprenant une bande formée d'une composition de caoutchouc,
la composition de caoutchouc comprenant :
un caoutchouc de polybutadiène étendu dans l'huile ayant une teneur en cis de 95 % en moles ou plus, une teneur en vinyle de 1 % en moles ou moins, et un poids moléculaire moyen en poids de 530000 ou plus ;
un caoutchouc de diène à base d'isoprène ;
de la silice ; et
du noir de charbon,
le caoutchouc de polybutadiène étendu dans l'huile étant synthétisé en utilisant un catalyseur de terre rare,
la composition de caoutchouc comprenant, sur la base de 100 % en masse des solides de caoutchouc totaux, 8 % à 80 % en masse d'un composant de caoutchouc de polybutadiène contenu dans le caoutchouc de polybutadiène étendu dans l'huile et 13 % à 80 % en masse du caoutchouc de diène à base d'isoprène,
la composition de caoutchouc comprenant, relativement à 100 parties en masse des solides de caoutchouc totaux, 15 à 125 parties en masse de la silice et 3 à 70 parties en masse du noir de charbon, pourvu qu'une quantité combinée de la silice et du noir de charbon soit de 45 à 130 parties en masse,
pneu neige lequel n'est pas un pneu neige comprenant une bande formée d'une composition de caoutchouc comprenant :
un caoutchouc de polybutadiène étendu dans l'huile ayant une teneur en cis de 95 % en moles ou plus, une teneur en vinyle de 1 % en moles ou moins, et un poids moléculaire moyen en poids de 530000 ou plus ;
un caoutchouc de styrène-butadiène ayant une teneur de styrène lié de 30 à 50 % en masse, déterminé par analyse 1H-RMN, et un poids moléculaire moyen en poids de 700 000 ou plus; un caoutchouc de diène à base d'isoprène ;
de la silice ; et
du noir de charbon,
le caoutchouc de polybutadiène étendu dans l'huile étant synthétisé en utilisant un catalyseur de terre rare, la composition de caoutchouc comprenant, sur la base de 100 % en masse des solide de caoutchouc, 10 à 67 % en masse d'un composant de caoutchouc de polybutadiène contenu dans le caoutchouc de polybutadiène étendu dans l'huile, 10 à 50 % en masse du caoutchouc de styrène-butadiène, et 13 à 30 % en masse du caoutchouc de diène à base d'isoprène, la composition de caoutchouc comprenant, relativement à 100 parties en masse des solides de caoutchouc totaux, 15 à 125 parties en masse de la silice et 3 à 70 parties en masse du noir de charbon, pourvu qu'une quantité combinée de la silice et du noir de charbon soit de 60 à 130 parties en masse.

2. Pneu neige selon la revendication 1,
dans lequel la composition de caoutchouc a une quantité totale de soufre dérivée d'agents de réticulation de 0,5 à 1,4 parties en masse relativement à 100 parties en masse des solides de caoutchouc totaux.

3. Pneu neige selon la revendication 1 ou 2,
dans lequel le caoutchouc de polybutadiène étendu dans l'huile a un poids moléculaire moyen en poids de 700000 ou plus.

4. Pneu neige selon l'une quelconque des revendications 1 à 3,
dans lequel la composition de caoutchouc comprend en outre au moins une d'une résine à base de terpène ayant un point de ramollissement mesuré selon la norme JIS K 6220-1 : 2001 de 104 °C à 126 °C ou un hydroxyde d'aluminium ayant une surface spécifique d'adsorption d'azote de 10 à 60 m²/g.

5. Pneu neige selon l'une quelconque des revendications 1 à 4,
dans lequel la composition de caoutchouc comprend, sur la base de 100 % en masse des solides de caoutchouc totaux, 20 % à 70 % en masse du composant de caoutchouc de polybutadiène contenu dans le caoutchouc de polybutadiène étendu dans l'huile et 30 % ou plus à 70 % en masse du caoutchouc de diène à base d'isoprène.

6. Pneu neige selon la revendication 2,
dans lequel la quantité totale de soufre dérivée des agents de réticulation est de 0,5 à 1,0 partie en masse relativement à 100 parties en masse des solides de caoutchouc totaux.
